# EUROPEAN PATENT SPECIFICATION

(11) **EP 1 733 622 B1**
(45) Date of publication and mention of the grant of the patent: **03.09.2008**
(21) Application number: 06115324.3
(22) Date of filing: 12.06.2006
(51) Int. Cl.: A23C 19/028, A23C 19/076, A23C 19/09, A23C 9/12

(54) **Methods of manufacture of cultured dairy products**
Verfahren zur Herstellung von Sauermilchprodukten
Procédés de fabrication de produits laitiers fermentés

(30) Priority: 17.06.2005 US 155792
(43) Date of publication of application: 20.12.2006
(73) Proprietor: KRAFT FOODS HOLDINGS, INC., Northfield, Illinois 60093 (US)
(72) Inventor: Kalamas, Thomas M., Castorland 13620 New York (US); Kincaid, Carrie M., Chicago Illinois 60613 (US); Barton, Dawn J., Wheeling Illinois 60090 (US); Cha, Alice S., Northbrook Illinois 60062 (US); Sweley, Jess C., Glenview Illinois 60025 (US); Apel, Lisa J., Evanston Illinois 60202 (US); Smith, Gary F., Glenview Illinois 60025 (US)
(74) Representative: Smaggasgale, Gillian Helen

(56) References cited:
- EP-A- 1 364 583
- EP-A- 1 386 540
- US-A- 5 800 855
- US-B1- 6 303 160

## Description

### Field of the Invention

The present invention relates to methods of making cultured dairy products, particularly cultured cream cheese products, and more particularly to cultured cream cheese compositions which are prepared without a whey-separation step and which have reduced levels of cultured dairy materials.

### Background of the Invention

Cream cheese is usually made by mixing sweet milk or skim milk with sweet cream to a desired fat content (usually about 10 to about 16 percent). The mixture is pasteurized, homogenized, and cooled to a setting temperature (typically about 62 to about 92°F (about 16.7 to about 33.3°C)). It is then inoculated with lactic acid bacteria and incubated until sufficient acidity has developed to cause the separation of curd from whey. The coagulation process may, optionally, be aided by the addition of a small amount of rennet. After the curd is separated from whey (e.g., using a centrifugal separator; see, e.g., U.S. Patent 2,387,276), stabilizers, salt, and other ingredients are added. Finally, the product is packaged and chilled. Many variations to this process have been introduced through the years (see, e.g., U.S. Patents 5,656,320; 5,079,024; 5,180,604; 6,419,975; 6,406,736; 6,558,761; 6,416,797; and 4,597,971).

Since whey proteins have been found to have high nutritive value and generally are less expensive than casein proteins, more recent efforts have been made to improve the utilization and retention of whey proteins when making cream cheese. For example, U.S. Patent 6,558,716 (May 6, 2003) provides a process for re-incorporating whey protein into curd post-whey-separation. While this produces a finished cheese product with enhanced levels of whey protein, there remains an inefficient yield loss because of the whey separation step and only a relatively small amount of whey protein is added back to the curd. Moreover, although the process of U.S. Patent 6,558,716 provides a less acidic cheese (and, thus, more organoleptically pleasing), consistent pH levels are not obtained since the bacterial cultures, which are live microorganisms, continue acid production while the liquid dairy mix is being concentrated, giving an inconsistent acidity/pH in the final product. In commercial cream cheese production, the dairy mix is broken at a given pH (e.g., between 4.5 and 5.5). As dairy mix is drawn off for pasteurization, the pH continues to decrease. Pasteurization effectively kills the lactic acid bacteria. But between the time the first dairy mix from the vat is pasteurized and the last portion of the dairy mix from the vat is pasteurized, the pH of the dairy mix and the resultant curd may vary by up to about one half of a pH unit. So the product at the end of the vat is significantly more acidic than that at the beginning of the vat.

U.S. Patent 6,406,736 (June 18, 2002) addresses this problem of non-robust pH control by proposing direct acidification of a liquid dairy mix. While a curd can be made using direct acidification (even without the need for a whey separation step), the finished product lacks the desired organoleptic properties of high quality cream cheese prepared with live and active bacterial cultures which produce auxiliary compounds in the liquid dairy mix (i.e., diacetyl, acetoin, free fatty acids) that enhance the cream cheese.

Other efforts have been made to produce a cream cheese without a whey separation step, but utilizing a traditional lactic acid-producing bacterial culture rather than direct acidification. For example, U.S. Patent 6,861,080 (March 1, 2005), incorporated the total solids (including protein) into a dairy mixture which is then used to create an emulsion with reduced average fat particle size below 0.8 microns and high quality organoleptic properties. Producing a cheese of this sort, however, typically requires investment in specialized equipment for creating the emulsion (e.g., by high pressure homogenizer) and heat transfer equipment. Moreover, all of the dairy materials are blended together before culturing and there are no teachings for minimizing acidity in finished product or assuring robust pH control (i.e., controlling variation of the pH level within production runs).

EP1386540 describes processers that incorporate ionic gums into wheyless cream cheese to reinforce curd structure, thus increasing product firmness. The process involves adding a relatively small (e.g. about 0.005 to about 0.1 %) but effective amount of the ionic gum (e.g. xanthan, gellan carrageenan, alginate gums, low methoxy pectin, or mixtures thereof) before a fermentation step, preferably prior to initial homogenisation/heating steps, to provide ionic gum-dairy protein interaction without causing coacervation with protein.

US6303160 describes a process for producing a high moisture cream cheese having desirable textural characteristics i.e. increased firmness. More specifically, the process described provides a high moisture cream cheese with significantly increased firmness by controlling the moisture levels during the manufacturing process at levels below the final target moisture level of the final cream cheese product; the moisture level of the final composition is then adjusted to the final target moisture level by the addition of water. It is suggested that control of the moisture levels during the manufacturing process results in significantly increased levels of firmness in the final cream cheese product.

Therefore, there remains a need for producing a natural cream cheese that is made using lactic acid-producing bacterial cultures, and yet delivers a consistent pH level with less undesirable acidity and therefore, a more organoleptically pleasing product. Additionally, there remains a need for a cream cheese-making process that provides for increased yields and efficiencies by facilitating increased incorporation of whey proteins without the need for a whey separation step, for specialized equipment for heating transfer, and/or for creating an emulsion with reduced average particle size. The present invention provides such improved process.

### Summary of the Invention

The present invention provides methods of preparing cultured dairy and/or cream cheese products which are prepared without a whey-separator step wherein a considerable quantity of non-cultured dairy material (generally greater than about 60 percent, and preferably about 70 to about 80 percent, of the total dairy protein) is added to a cultured dairy mix and subsequently functionalized (e.g., using high temperature and high shear conditions) to offer a finished cheese product with similar organoleptic properties and increased levels of whey protein compared to conventionally made cream cheese products. Since a whey separation step is not used, it is more cost efficient. Since a significant proportion of protein and dairy solids are added after culturing, the product can be made in continuous production without specialized heat transfer equipment, and ultimately offers a finished product with a more consistent pH level and less undesirable acidity, thereby providing a product with more desirable flavor profile.

The present invention provides a process for the manufacture of cultured dairy product containing cultured and non-cultured dairy ingredients, said process comprising
(1) providing a first mixture of dairy ingredients having a first amount of dairy protein;
(2) homogenizing and pasteurizing the first mixture to form a homogenized and pasteurized first mixture;
(3) cooling the homogenized and pasteurized first mixture to about 68 to about 104°F (about 20 to about 40°C) to form a cooled first mixture;
(4) adding a lactic acid-producing bacterial culture to the cooled first mixture, after cooling to form a culture-containing first mixture;
(5) culturing the culture-containing first mixture at a temperature and for a time sufficient to obtain a pH-stable cultured first mixture, wherein-the stable pH is in the range of about 3.5 to about 5.5 (preferably about 4.0 to about 4.5);
(6) providing a second mixture of dairy ingredients having a second amount of dairy protein, salts, and gums;
(7) adding the second mixture to the pH-stable cultured first mixture to form a third mixture; and
(8) heating and homogenizing the third mixture at a temperature and for a time sufficient to obtain a cultured dairy product containing cultured and non-cultured dairy ingredients, having a total amount of dairy protein;
wherein the first amount of dairy protein is about 10 to about 40 percent and the second amount of dairy protein is about 60 to about 90 percent, based on the total amount of dairy protein, wherein the cultured dairy product has a whey protein to casein ratio of greater than about 60:40, and
wherein the process does not include a whey-separation step.

The invention also provides a process for the manufacture of an aerated cultured dairy product containing cultured and non-cultured dairy ingredients, said process comprising
(1) providing a first mixture of dairy ingredients having a first amount of dairy protein;
(2) homogenizing and pasteurizing the first mixture to form a homogenized and pasteurized first mixture;
(3) cooling the homogenized and pasteurized first mixture to about about 68 to about 104°F (about 20 to about 40°C) to form a cooled first mixture;
(4) adding a lactic acid-producing bacterial culture to the cooled first mixture, after cooling to form a culture-containing first mixture;
(5) culturing the culture-containing first mixture at a temperature and for a time sufficient to obtain a pH-stable cultured first mixture, wherein the stable pH is in the range of about 3.5 to about 5.5;
(6) providing a second mixture of dairy ingredients having a second amount of dairy protein, salts, and gums;
(7) adding the second mixture to the pH-stable cultured first mixture to form a third mixture;
(8) heating and homogenizing the third mixture at a temperature and for a time sufficient to obtain a cultured dairy product containing cultured and non-cultured dairy ingredients, having a total amount of dairy protein; and
(9) aerating the cultured dairy product to provide an aerated cultured dairy product having an overrun of about least about 5 percent;
wherein the first amount of dairy protein is about 10 to about 40 percent and the second amount of dairy protein is about 60 to about 90 percent, based on the total amount of dairy protein, wherein the aerated cultured dairy product has a whey protein to casein ratio of greater than about 60:40, and wherein the process does not include a whey-separation step.

### Brief Description of the Drawing

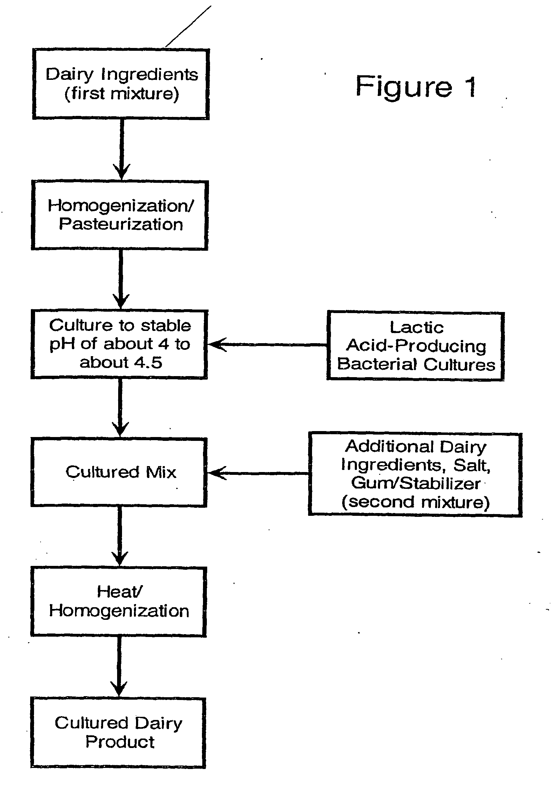

Figure 1 provides a flow diagram illustrating the general process of the present invention.

### Detailed Description

As indicated in Figure 1, liquid dairy ingredients are homogenized and pasteurized to form a first mixture which will be, in a subsequent step, cultured. Suitable dairy ingredients included, for example, milk of varying fat levels (i.e., no-fat or skim milk, low-fat milk, full-fat or whole milk, whole milk with added fat, and the like), milk solids, cream, and the like. Generally, this first mixture contains about 10 to about 50 percent solids. This first mixture is then pasteurized and homogenized using conventional methods and then cooled to about 68 to about 104°F (about 20 to about 40°C).

The first mixture is then cultured at a temperature of about 68 to about 104°F(about 20 to about 40°C) and for a time sufficient to obtain a stable pH of about 3.5 to about 5.5 (preferably about 4.0 to about 4.5) using conventional lactic acid bacterial cultures and culturing conditions. The lactic acid culture used is not particularly limited. For example, it may be selected from the group consisting of *Lactobacillus bulgaricus, Lactobacillus lactis, Lactobacillus helveticus, Lactobacillus delbrueckii* subsp. *lactis, Streptococcus thermophilus, Lactococcus lactis* subsp. *lactis, Lactococcus lactis* subsp. *cremoris, Lactococcus lactis* subsp. *lactis biovar diacetylactis, Leuconostoc lactis, Leuconostoc mesenteroides* subsp. *cremoris, Pediococcus pentosaceus*, and *Lactobacillus casei*, and mixtures thereof. Preferably, the cultures are direct vat set (DVS) cultures. Such cultures are generally added to the fermentation mixture at a level of about 0.01 to about 1 percent, particularly about 0.05 to about 0.5 percent. Generally a stable pH within the desired range is obtained within about 10 to about 16 hours.

The resulting cultured mix is then blended with a second mixture containing additional, but uncultured, dairy ingredients, salts, gums, and, optionally, conventional cheese additives. These additional dairy ingredients include , for example, dry whey protein concentrate, liquid whey protein concentrate, whey protein isolate, liquid or dried sweet whey, liquid or dried acid whey, and the like, as well as mixtures thereof. Up to about 20 percent of the protein can be non-whey, milk protein (e.g., dry milk, milk solids, milk concentrates, and the like). The composition and the amounts of the various ingredients in the second mixture, and the amount of the second mixture added to the blended mixture, should be adjusted to provide a cream cheese product of the desired composition. Generally the amount of dairy protein provided by the first mixture (i.e., cultured) should be about 10 to about 40 percent of the final product and the amount of dairy protein provided by the second mixture (i.e., uncultured) should be about 60 to about 90 percent of the final product. Preferably, the final product should contain about 20 to about 30 percent of cultured dairy protein and about 70 to about 80 percent of uncultured dairy protein. Moreover, the final product generally contains about 0.5 to about 2 percent salt and about 0.2 to about 1 percent gums/stabilizers and preferably about 0.7 to about 1.3 percent salt and about 0.3 to about 0.7 percent gums/stabilizers. Thus, the second mixture should be adjusted to obtain sufficient uncultured dairy protein, salt, and gums/stabilizers to obtain these desired levels in the final product.

Suitable gums/stabilizers include those used in conventional cream cheese products. Examples of suitable gums/stabilizers include carob gum, tara gum, xanthan gum, locust bean gum, carrageenan, cellulose gum, maltodextrin, pectin, inulin, starch, gelatin, agar, and the like as well as mixtures thereof. Preferred gums/stabilizers include xanthan, locust bean gum, and guar gum. The terms "gum," "stabilizer," and "gum/stabilizer" are used interchangeably in the present specification. The second mixture may also optionally contain additional ingredients such as flavors, colorants, antimicrobial agents, and the like. Such optional ingredients may be added at other points in the process so long as they do not adversely effect the process or the resulting product.

The blend of the cultured mixture and the second mixture, which contains uncultured dairy protein, salt, and gums/stabilizers, is then subjected to a heat treatment and homogenization, in either order, to provide the desired product. In one operation, the mixture is homogenized in a high shear homogenizer. Preferably, the blend is homogenized at a pressure of about 500 to about 8,000 pounds per square inch (psi) (about 3.4MPa to about 55.2MPa). More preferably, the blend is homogenized at a pressure of about 1,500 to about 6,000 psi (about 10.34MPa to about 41.37MPa), and most preferably at about 2,000 to about 4,000 psi (about 13.79MPa to about 27.58MPa). Homogenization provides reduced particle sizes in the mixture. It is preferred to attain a particle size less than about 2.5 microns, and more preferably, a particle size less than about 1.5 microns. Suitable homogenizers that may be employed for this purpose are well-known in the fields of dairy science and food chemistry.

The second operation to which the blend is subjected is a controlled treatment at an elevated temperature. In general, the blend is treated at from about 175 to about 215°F (about 79 to about 102°C) for about 2 to about 60 minutes. Preferably, this treatment is at a temperature from about 180 to about 205°F (about 82 to about 96°C) for about 5 to about 30 minutes. Various ways of conducting the controlled elevated temperature treatment are known to workers of skill in dairy science and food chemistry. Such methods include, for example, heating in a thermally jacketed batch vessel, or passage through a heat exchange tube in which the fluid velocity and the length of the tube establish the duration of the treatment. The preferred sequence of these operations is one in which the homogenization precedes the temperature treatment. The reverse sequence, however, also is found to work. In general, the homogenization and heat treatment can also be carried out at the same time, for example, by heating the blend before and/or during the homogenization. Alternatively, if one of these procedures is carried out first, the other can follow within an operationally convenient time. Although not wishing to be limited by theory, the combined heat and homogenization treatments are thought to denature and cross link the whey proteins from the second mixture, thereby building the desired texture.

The resulting cultured dairy or cream cheese product, which contains both cultured and uncultured dairy proteins, has a pH in the range of about 4.5 to about 5.5, and preferably, about 4.8 to about 5.2. Moreover, it has been found that the resulting cultured dairy or cream chees product has a more consistent pH during its manufacture and contains less acidity than conventional cream cheese products. Generally, the present cultured dairy or cream cheese has a shelf life of about least about 9 months when packaged in a sealed container and stored under refrigeration conditions (i.e., about 45°F(7°C). Moreover, the resulting cultured dairy or cream cheese product has a whey protein to casein ratio of about 60:40 to about 90:10, and preferably about 75:25 to about 85:15. Thus, the present cream cheese products contain significantly more whey protein than conventional cream cheese products, including the cream cheese products produced by the methods described in U.S. Patent 6,558,716, which generally contain less than 45 percent whey protein based on total protein. Generally, the present cream cheese products provided by the present invention contain about 60 to about 90 percent whey protein, based on total protein content, and preferably about 75 to about 85 percent whey protein.

Other ingredients, including but not limited to, sweeteners, fruits, flavors, and other conventional additives may be added to the resulting cultured cream cheese products. The cultured dairy or cream cheese products may also be aerated to provide a low fat aerated dairy product having an overrun greater than about 5 percent, preferably greater than about 15 percent, and more preferably about 15 to 50 percent. By adding appropriate levels of sweeteners (i.e., to taste) and aerating, low fat aerated dairy products containing less than about 12 percent fat (preferably about 3 to about 9 percent fat), greater than about 5 percent protein (preferably about 6 to about 10 percent protein), and about 40 to 80 percent moisture (preferably about 60 to about 75 percent moisture) can be prepared. Such aerated dairy products have a fat to protein ratios of less than about 2.5 (preferably less than about 1.4), overrun values of at least about 5 percent (preferably greater than about 15 percent and more preferably about 15 to 50 percent), milk solids of at least 10 percent, and a foam strength of at least about 100 pascals.

Unless otherwise indicated, all percentages and ratios in the present specification are by weight based on the total weight of the final cream cheese product composition. All patent and publications cited in the present specification are hereby incorporated by reference in their entireties.

**Example 1**. A full-fat cream cheese was prepared according to the invention using the general method illustrated in the process flow diagram (Figure 1). Pasteurized cream (39.6% butterfat) was cultured using about 1 percent of a lactic acid-producing bacterial culture (DSM Food Specialties, Milville, UT) at about 72°F (22.2°C) to a steady-state pH of 4.43 (total time of about 12.5 hours). After heating to 180°F (82.2°C), ingredient additions were made as shown in the following recipe (based on 100lbs (45.4kg) finished product).

**Table 1 A**

| Ingredient | Amount (lbs) | (kg) |
|---|---|---|
| Cultured Mix | 82.1 | 37.3 |
| Water | 8.2 | 3.7 |
| WPC (80% protein) | 5.1 | 2.4 |
| Whey Powder | 3.4 | 1.5 |
| Salt | 0.9 | 0.4 |
| Stabilizer/gum | 0.3 | 0.1 |
| TOTAL | 100.0 | 45.4 |

The whey protein concentrate (WPC) was from Glanbia Nutritional, Inc. (Monroe, WI); the whey powder was from American Milk Producers, Inc. (Jim Falls, WI; and the stabilizer/gum was locust bean gum from Danisco USA, Inc. (New Century, KS). After all ingredients were added, the blend was held for 10 minutes at 180 to 185°F (82 to 85°C) and subsequently homogenized at 3000/500 psi (20.7/3.4MPa) (first and second stage). Product was collected and packaged.

The cream cheese prepared according to the process of the invention exhibited the following composition and physical properties compared to (1) a conventionally made, full-fat, soft spread cream cheese and (2) a cream cheese prepared using the process of example 2 of U.S. Patent 6,558,716. In Table 1 B (as well as in corresponding Tables 2C and 3C in Examples 2 and 3, respectively), total solids, total fat, total solids nonfat, and total protein are based on the finished cream cheese composition, whereas percentage solids uncultured, percentage fat uncultured, percentage solids nonfat uncultured, and percentage protein uncultured are based on the total solids, total fat, total solids nonfat, and total protein, respectively, of the finished cream cheese composition. For example, the inventive product contains 6.0 percent protein, and of this protein, 73.9 percent is uncultured (and, therefore, 26.1 percent is cultured).

**Table 1B**

| | **Inventive** | **Conventional** | **U.S. Patent 6,558,716 (example 2)** |
|---|---|---|---|
| **Total Solids (%)** | 46.8 | 45.0 | 45.5 |
| **Total Fat (%)** | 33.0 | 33.0 | 33.1 |
| **Total Solids Nonfat (%)** | 13.8 | 12.0 | 12.4 |
| **Total Protein (%)** | 6.0 | 5.0 | 6.0 |
| **Percentage Protein Uncultured** | 73.9 | 0 | 21.4 |
| **Whey Protein to Casein Ratio** | 80:20 | 20:80 | 34:66 |
| **Finished product pH** | 5.1 | 4.4 - 4.8 | 4.4 - 4.8 |
| **Cheese Yield (%)** | 100 | -60 | 52 |

The inventive process incorporates a preponderance of protein (i.e., about 74 percent of total protein) after the culturing step. This creates a finished cheese product with increased levels of whey protein, more consistent or robust pH level during commercial manufacture, and higher pH levels than conventional and previous efforts. The product prepared according to the process of the invention was judged to have good flavor and overall eating quality with reduced levels of undesirable acidity compared to conventional cream cheese. Moreover, the inventive process does not include a whey separation step and is therefore more efficient.

**Example 2.** A reduced-fat cream cheese was prepared according to the process of the invention using the general method illustrated in the process flow diagram (Figure 1). Milk and cream were blended, homogenized, and pasteurized to produce a dairy mix with the following composition:

**Table 2A**

| **Component** | **Amount (%)** |
|---|---|
| **Total Solids** | 26.9 |
| **Fat** | 17.1 |
| **Protein** | 2.5 |
| **Casein** | 2.0 |
| **Whey Protein** | 0.5 |
| **Lactose** | 3.8 |

The dairy mix was cultured until the pH level reached steady state (pH 4.17). After heating from about 61 to about 180°F(about 16 to about 82°C), ingredient additions were made as shown in the following recipe (based on 100 lbs (45.4kg) finished product).

**Table 2B**

| Ingredient | Amount (lbs) | (kg) |
|---|---|---|
| Cultured Mix | 80.2 | 40.5 |
| WPC (80% protein) | 6.9 | 3.2 |
| Whey Powder | 2.5 | 1.1 |
| Salt | 0.9 | 0.4 |
| Stabilizer/gum | 0.5 | 0.2 |
| TOTAL | 100.0 | 45.4 |

The WPC and whey powder were the same as used in Example 1. The stabilizer/gum was a blend of about 80 percent locust bean gum (Danisco, USA, Inc., New Century, KS) and about 20 percent xanthan gum (CP Kelco, Chicago, IL). After all ingredients were added to the mix, the blend was held for 10 minutes at about 180 to about 185°F (about 82 to 85°C) and subsequently homogenized at 3000/500 psi (20.7/3.4MPa) (first and second stage). Product was collected and packaged.

The cream cheese prepared according to the process of the invention exhibited the following composition and properties compared to (1) conventionally made, light cream cheese and (2) a similar cream cheese prepared using the process of example 7 of U.S. Patent 6,558,716.

**Table 2C**

| | **Inventive** | **Conventional** | U.S. Patent 6,558,716 **(example 2)** |
|---|---|---|---|
| **Total Solids (%)** | 34.3 | 34.0 | 32.7 |
| **Total Fat (%)** | 15.9 | 16.0 | 15.0 |
| **Total Solids Nonfat (%)** | 18.4 | 17.7 | 17.7 |
| **Total Protein (%)** | 8.0 | 8.0 | 9.0 |
| **Percentage Protein Uncultured** | 71.8 | 0 | 29.5 |
| **Whey Protein to Casein Ratio** | 77:23 | 20:80 | 41:59 |
| **Finished product pH** | 5.0 | 4.4 - 4.8 | 4.4 - 4.8 |
| **Cheese Yield (%)** | 100 | ∼27.5 | ∼37 |

As with the previous example, the inventive process incorporates a preponderance of protein after the culturing step. This creates a finished cheese product with increased levels of whey protein and more consistent or robust pH during commercial manufacture, and higher pH levels than - conventional and previous efforts. The product prepared according to the process of the invention was judged to have good flavor and overall eating quality with reduced levels of undesirable acidity compared to conventional cream cheese. Moreover, the inventive process does not include a whey separation step and is therefore more efficient.

**Example 3.** An ultra-light cream cheese was prepared according to the process of the invention using the general method illustrated in the process flow diagram (Figure 1). Milk and cream were blended, homogenized, and pasteurized to produce a dairy mix with the following composition:

**Table 3A**

| **Component** | **Amount (%)** |
|---|---|
| **Total Solids** | 15.6 |
| **Fat** | 6.7 |
| **Protein** | 2.9 |
| **Casein** | 2.3 |
| **Whey Protein** | 0.6 |
| **Lactose** | 4.7 |

The dairy mix was cultured to a steady-state pH of 4.17. After heating from about 58 to about 180°F(about 14 to about 82°C) ingredient additions were made as shown in the following recipe (based on 100 lbs (45.4kg) finished product).

**Table 38**

| Ingredient | Amount (lbs) | (kg) |
|---|---|---|
| Cultured Mix | 85.4 | 38.8 |
| WPC (80% protein) | 11.9 | 5.4 |
| Whey Powder | 1.3 | 0.6 |
| Salt | 0.9 | 0.4 |
| Stabilizer/gum | 0.5 | 0.2 |
| TOTAL | 100.0 | 45.4 |

The WPC, whey powder, and stabilizer/gum blend were the same as used in Example 2. After all ingredients were added to the mix, the blend was held for 10 minutes at about 180 to about 185°F (about 82 to about 85°C) and subsequently homogenized at 3000/500 psi (20.7/3.4MPa) (first and second stage). Product was collected out and packaged. The cream cheese prepared according to the process of the invention exhibited the following composition and properties.

**Table 3C**

| | **Inventive** |
|---|---|
| **Total Solids(%)** | 27.3 |
| **Total Fat (%)** | 6.8 |
| **Total Solids Nonfat (%)** | 20.5 |
| **Total Protein (%)** | 12.0 |
| **Percentage Protein Uncultured** | 79.6 |
| **Whey Protein to Casein Ratio** | 84:16 |
| **Finished product pH** | 5.07 |
| **Cheese Yield (%)** | 100 |

As with the previous examples, the inventive process incorporates a preponderance of protein after the culturing step. This creates a finished cheese product with increased levels of whey protein and a robust, higher pH level as well as good flavor and overall eating quality. Moreover, the inventive process does not include a whey separation step and is therefore efficient. Although comparison products (i.e., conventional products and products prepared by the method of U.S. Patent 6,558,716) were not evaluated, the properties of such comparison products are expected to be similar to the comparison products shown in Examples 1 and 2 (except for lower total fat levels). ,

**Example 4.** A low-fat, aerated, cultured dairy product manufactured according to the process of the invention, was prepared by blending milk and cream to the composition shown in Table 4A.

**Table 4A**

| Component | Amount (%) |
|---|---|
| Total Solids | 19.2% |
| Fat | 10.0% |
| Protein | 2.76% |
| Casein | 2.208% |
| Whey Protein | 0.552% |
| Lactose | 4.31% |

The blended dairy mix was homogenized at 2500/500 psi (17/3.4MPa) (first and second stage), pasteurized (168°F (75.6°C) for 30-seconds), and cooled to about 72°F (22.2°C).

Subsequently, the dairy mix was inoculated with 0.03% DVS lactic acid-producing bacterial cultures supplied by Chr. Hansen and allowed to incubate at 72°F (22.2°C) for 15 hours. When the pH reached a steady state of 4.35, the mix was heated to 180°F (82.2°C) and the following ingredient additions were made as shown in Table 4B.

**Table 48**

| Ingredient | Amount (lbs) | (kg) |
|---|---|---|
| Cultured Mix | 529.8 | 240.3 |
| WPC | 60.75 | 27.6 |
| Stabilizer/gum Whey | 4.5 | 2.0 |
| Salt | 1.05 | 0.5 |
| Tricalcium Phosphate | 0.45 | 0.2 |
| TOTAL | 600.0 | 270.6 |

The WPC (49.75% protein) was supplied by First District Association (Litchfield, MN). The stabilizer/gum used was a blend of about 77 percent locust bean gum (supplied by Danisco USA Inc.), about 15 percent xanthan (supplied by CP Kelco), and about 8 percent carrageenan (supplied by FMC Corp., Philadelphia, PA). After ingredients were added to the mix, the blend was held for 15 minutes at 180°F (82.2°C) and subsequently homogenized at 3000 psi (20.7MPa) (single stage). Then, the dairy product was heated to 188°F(86.7°C) via a triple-tube and held for 60 minutes in a Grohn kettle while maintaining product temperature of 175 to 180°F (79.4 to 82.2°C). Next, a portion of the cultured dairy product was mixed with additional ingredients as shown in the recipe in Table 4C.

**Table 4C**

| Ingredient | Amount (lbs) | (kg) |
|---|---|---|
| Cultured Dairy Product | 247.8 | 112.4 |
| Sugar | 43.8 | 19.9 |
| Sorbic Acid | 0.15 | 0.07 |
| TOTAL | 291.75 | 132.37 |

The resulting product was cooled to approximately 36°F (2.2°C) using a scraped surface heat exchanger and whipped/aerated to approximately 20% overrun. Finished goods were collected in 8-oz (227g) cups, sealed, and placed into refrigerated (45°F (7.2°C)) storage. This product was held under refrigerated conditions (<45°F (<7.2°C)) and monitored for 4 months with no degradation of air cell stability or apparent loss of overrun. The product prepared according to the invention process was evaluated and determined to have good flavor and overall eating quality throughout shelf life. A summary of the finished goods characteristics is summarized in Table 4D.

**Table 4D**

| | Inventive |
|---|---|
| Total Solids(%) | 36.5 |
| Total Fat (%) | 8.1 |
| Total Solids Nonfat (%) | 28.4 |
| Total Protein (%) | 6.2 |
| Percentage Protein Uncultured | 65.6 |
| Whey Protein to Casein Ratio | 72:28 |
| Finished product pH | 5.07 |
| Overrun (%) | 20 |
| Foam Strength (Pascals) | 353.2 |
| Cheese Yield (%) | 100 |

Foam strength was measured using a Haake model VT550 viscometer (Gebruder Haake GmbH, Karlsruhe, Germany) at a shear rate of 0.0236 sec⁻¹ and a temperature of 45°F (7.2°C).

## Claims

1. A process for the manufacture of a cultured dairy product containing cultured and non-cultured dairy ingredients, said process comprising
(1) providing a first mixture of dairy ingredients having a first amount of dairy protein;
(2) homogenizing and pasteurizing the first mixture to form a homogenized and pasteurized first mixture;
(3) cooling the homogenized and pasteurized first mixture to 20 to 40°C (68 to 104°F) to form a cooled first mixture;
(4) adding a lactic acid-producing bacterial culture to the cooled first mixture, after cooling to form a culture-containing first mixture;
(5) culturing the culture-containing first mixture at a temperature and for a time sufficient to obtain a pH-stable cultured first mixture, wherein the stable pH is in the range of 3.5 to 5.5;
(6) providing a second mixture of dairy ingredients having a second amount of dairy protein, salts, and gums;
(7) adding the second mixture to the pH-stable cultured first mixture to form a third mixture; and
(8) heating and homogenizing the third mixture at a temperature and for a time sufficient to obtain a cultured dairy product containing cultured and non-cultured dairy ingredients, having a total amount of dairy protein;
wherein the first amount of dairy protein is 10 to 40 percent and the second amount of dairy protein is 60 to 90 percent, based on the total amount of dairy protein, wherein the cultured dairy product has a whey protein to casein ratio of greater than 60:40, and wherein the process does not include a whey-separation step.

2. The process of Claim 1 , wherein the first amount of dairy protein is 20 to 30 percent and the second amount of dairy protein is 70 to 80 percent, based on the total amount of dairy protein.

3. The process of Claim 1 or 2, wherein the whey protein to casein ratio is 75:25 to 85:15.

4. The process of any one of Claims 1 to 3, wherein the cultured dairy product has a pH in a range of 4.5 to 5.5, and wherein the cultured dairy product has a shelf life of at least about 9 months under refrigeration conditions.

5. The process of any one of Claims 1 to 4 wherein the cultured dairy product is cultured cream cheese.

6. The process of claim 1 for the manufacture of an aerated cultured dairy product containing cultured and non-cultured dairy ingredients, said process comprising
(1) providing a first mixture of dairy ingredients having a first amount of dairy protein;
(2) homogenizing and pasteurizing the first mixture to form a homogenized and pasteurized first mixture;
(3) cooling the homogenized and pasteurized first mixture to 20 to 40°C (68 to 104°F) to form a cooled first mixture;
(4) adding a lactic acid-producing bacterial culture to the cooled first mixture, after cooling to form a culture-containing first mixture;
(5) culturing the culture-containing first mixture at a temperature and for a time sufficient to obtain a pH-stable cultured first mixture, wherein the stable pH is in the range of 3.5 to 5.5;
(6) providing a second mixture of dairy ingredients having a second amount of dairy protein, salts, and gums;
(7) adding the second mixture to the pH-stable cultured first mixture to form a third mixture;
(8) heating and homogenizing the third mixture at a temperature and for a time sufficient to obtain a cultured dairy product containing cultured and non-cultured dairy ingredients, having a total amount of dairy protein; and
(9) aerating the cultured dairy product to provide an aerated cultured dairy product having an overrun of about least 5 percent;
wherein the first amount of dairy protein is 10 to 40 percent and the second amount of dairy protein is 60 to 90 percent, based on the total amount of dairy protein, wherein the aerated cultured dairy product has a whey protein to casein ratio of greater than 60:40, and wherein the process does not include a whey-separation step.

7. The process of Claim 6 wherein a sweetener is blended with the cultured dairy product prior to aerating, wherein the aerated cultured dairy product contains less than 12 percent fat, greater than 5 percent total dairy protein, 40 to 80 percent moisture, and has a fat to total dairy protein ratio of less than 2.5.

8. The process of Claim 6 or 7 wherein the aerated cultured dairy product contains 3 to 9 percent fat, 6 to 10 percent total dairy protein, and 60 to 75 percent moisture, wherein the fat to total dairy protein ratio is less than 1.4, and wherein the overrun is 15 to 50 percent.

## Patentansprüche

1. Verfahren zur Herstellung eines durch Mikroorganismen gereiften Milchprodukts, das durch Mikroorganismen gereifte und nicht durch Mikroorganismen gereifte Bestandteile enthält, bei dem man
(1) ein erstes Gemisch aus Milchbestandteilen mit einer ersten Milchproteinmenge bereitstellt,
(2) das erste Gemisch homogenisiert und pasteurisiert, um ein homogenisiertes und pasteurisiertes erstes Gemisch zu bilden,
(3) das homogenisierte und pasteurisierte erste Gemisch auf 20 bis 40°C (68 bis 104°F) abkühlt, um ein abgekühltes erstes Gemisch zu bilden,
(4) dem abgekühlten ersten Gemisch nach der Abkühlung eine Milchsäure erzeugende Bakterienkultur zusetzt, um ein die Kultur enthaltendes erstes Gemisch zu bilden,
(5) das die Kultur enthaltende erste Gemisch bei einer Temperatur und in einer Zeit reifen läßt, die ausreichen, um ein pH-beständiges gereiftes erstes Gemisch zu erhalten, wobei der beständige pH in dem Bereich von 3,5 bis 5,5 ist,
(6) ein zweites Gemisch aus Milchbestandteilen mit einer zweiten Menge Milchprotein, Salzen und Gummiharzen bereitstellt,
(7) das zweite Gemisch dem pH-beständigen gereiften ersten Gemisch zusetzt, um ein drittes Gemisch zu bilden und
(8) das dritte Gemisch bei einer Temperatur und eine Zeitdauer erhitzt und homogenisiert, die ausreichen, um ein durch Mikroorganismen gereiftes Milchprodukt mit einem Gehalt an durch Mikroorganismen gereiften und nicht gereiften Milchbestandteilen zu erhalten, das eine Gesamtmenge Milchprotein hat,
wobei die erste Milchproteinmenge 10 bis 40 Prozent und die zweite Milchproteinmenge 60 bis 90 Prozent bezogen auf die Gesamtmenge Milchprotein beträgt, das gereifte Milchprodukt ein Verhältnis von Molkeprotein zu Kasein von mehr als 60:40 hat und das Verfahren keine Molkeabtrennungsstufe hat.

2. Verfahren des Anspruchs 1, bei dem die erste Milchproteinmenge 20 bis 30 Prozent und die zweite Milchproteinmenge 70 bis 80 Prozent bezogen auf die Gesamtmenge Milchprotein beträgt.

3. Verfahren des Anspruchs 1 oder 2, bei dem das Verhältnis von Molkeprotein zu Kasein 75:25 bis 85:15 ist.

4. Verfahren eines der Ansprüche 1 bis 3, bei dem das gereifte Milchprodukt einen pH in dem Bereich von 4,5 bis 5,5 hat und unter Kühlbedingungen eine Haltbarkeitsdauer von wenigstens etwa 9 Monaten hat.

5. Verfahren eines der Ansprüche 1 bis 4,, bei dem das gereifte Milchprodukt gereifter Schmelzkäse ist.

6. Verfahren des Anspruchs 1 zur Herstellung eines mit Luft versetzten gereiften Milchprodukts, das gereifte und nicht gereifte Milchbestandteile enthält, bei dem man
(1) ein erstes Gemisch aus Milchbestandteilen mit einer ersten Milchproteinmenge bereitstellt,
(2) das erste Gemisch homogenisiert und pasteurisiert, um ein homogenisiertes und pasteurisiertes erstes Gemisch zu bilden,
(3) das homogenisierte und pasteurisierte erste Gemisch auf 20 bis 40°C (68 bis 104°F) abkühlt, um ein abgekühltes erstes Gemisch zu bilden,
(4) dem abgekühlten ersten Gemisch nach der Abkühlung eine Milchsäure erzeugende Bakterienkultur zusetzt, um ein die Kultur enthaltendes erstes Gemisch zu bilden,
(5) das die Kultur enthaltende erste Gemisch bei einer Temperatur und in einer Zeit reifen läßt, die ausreichen, um ein pH-beständiges gereiftes erstes Gemisch zu erhalten, wobei der beständige pH in dem Bereich von 3,5 bis 5,5 ist,
(6) ein zweites Gemisch aus Milchbestandteilen mit einer zweiten Menge Milchprotein, Salzen und Gummiharzen bereitstellt,
(7) das zweite Gemisch dem pH-beständigen gereiften ersten Gemisch zusetzt, um ein drittes Gemisch zu bilden,
(8) das dritte Gemisch bei einer Temperatur und eine Zeitdauer erhitzt und homogenisiert, die ausreichen, um ein durch Mikroorganismen gereiftes Milchprodukt mit einem Gehalt an durch Mikroorganismen gereiften und nicht gereiften Milchbestandteilen zu erhalten, das eine Gesamtmenge Milchprotein hat und
(9) das gereifte Milchprodukt mit Luft versetzt, um ein mit Luft versetztes gereiftes Milchprodukt mit einem Luftaufschlag von etwa wenigstens 5 Prozent zu schaffen,
wobei bezogen auf die Gesamtmenge Milchprotein die erste Milchproteinmenge 10 bis 40 Prozent und die zweite Milchproteinmenge 60 bis 90 Prozent ist, das mit Luft versetzte gereifte Milchprodukt ein Verhältnis Molkeprotein zu Kasein von mehr als 60:40 hat und das Verfahren keine Molkeabtrennungsstufe hat.

7. Verfahren des Anspruchs 6, bei dem mit dem gereiften Milchprodukt vor dem Versetzen mit Luft ein Süßungsmittel gemischt wird und bei dem das mit Luft versetzte gereifte Milchprodukt weniger als 12 Prozent Fett, mehr als 5 Prozent Gesamtmilchprotein und 40 bis 80 Prozent Feuchtigkeit enthält und ein Verhältnis von Fett zu Gesamtmilchprotein von weniger als 2,5 hat.

8. Verfahren des Anspruchs 6 oder 7, bei dem das mit Luft versetzte gereifte Milchprodukt 3 bis 9 Prozent Fett, 6 bis 10 Prozent Gesamtmilchprotein und 60 bis 75 Prozent Feuchtigkeit enthält und das Verhältnis von Fett zu Gesamtmilchprotein kleiner als 1,4 ist und der Luftaufschlag 15 bis 50 Prozent ist.

## Revendications

1. Procédé de fabrication d'un produit laitier de culture contenant des ingrédients laitiers de culture et non de culture, ledit procédé comprenant :
(1) la fourniture d'un premier mélange d'ingrédients laitiers ayant une première quantité de protéine laitière ;
(2) l'homogénéisation et la pasteurisation du premier mélange pour former un premier mélange homogénéisé et pasteurisé ;
(3) le refroidissement du premier mélange homogénéisé et pasteurisé à 20 à 40 °C (68 à 104 °F) pour former un premier mélange refroidi ;
(4) l'ajout d'une culture bactérienne produisant de l'acide lactique au premier mélange refroidi, après refroidissement pour former un premier mélange contenant une culture ;
(5) la mise en culture du premier mélange contenant une culture à une température et pendant une durée suffisantes pour obtenir un premier mélange de culture stable au pH, le pH stable étant de 3,5 à 5,5 ;
(6) la fourniture d'un deuxième mélange d'ingrédients laitiers ayant une deuxième quantité de protéine laitière, des sels et des gommes ;
(7) l'ajout du deuxième mélange au premier mélange de culture stable au pH pour former un troisième mélange ; et
(8) le chauffage et l'homogénéisation le troisième mélange à une température et pendant une durée suffisantes pour obtenir un produit laitier de culture contenant des ingrédients laitiers de culture et non de culture, ayant une quantité totale de protéine laitière ;
la première quantité de protéine laitière étant de 10 à 40 pourcent et la deuxième quantité de protéine laitière étant de 60 à 90 pourcent, par rapport à la quantité totale de protéine laitière, le produit laitier de culture ayant un rapport entre protéine lactosérique et caséine supérieur à 60:40, et le procédé ne comprenant pas d'étape de séparation du lactosérum.

2. Procédé selon la revendication 1, dans lequel la première quantité de protéine laitière est de 20 à 30 pourcent et la deuxième quantité de protéine laitière est de 70 à 80 pourcent, par rapport à la quantité totale de protéine laitière.

3. Procédé selon la revendication 1 ou 2, dans lequel le rapport entre protéine lactosérique et caséine est de 75:25 à 85:15.

4. Procédé selon l'une quelconque des revendications 1 à 3, dans lequel le produit laitier de culture a un pH de 4,5 à 5,5, et dans lequel le produit de culture a une durée de conservation supérieure ou égale à 9 mois en conditions réfrigérées.

5. Procédé selon l'une quelconque des revendications 1 à 4, dans lequel le produit laitier de culture est du fromage à la crème de culture.

6. Procédé selon la revendication 1 de fabrication d'un produit laitier de culture aéré contenant des ingrédients laitiers de culture et non de culture, ledit procédé comprenant
(1) la fourniture d'un premier mélange d'ingrédients laitiers ayant une première quantité de protéine laitière ;
(2) l'homogénéisation et la pasteurisation du premier mélange pour former un premier mélange homogénéisé et pasteurisé ;
(3) le refroidissement du premier mélange homogénéisé et pasteurisé à 20 à 40 °C (68 à 104 °F) pour former un premier mélange refroidi ;
(4) l'ajout d'une culture bactérienne produisant de l'acide lactique au premier mélange refroidi, après refroidissement pour former un premier mélange contenant une culture ;
(5) la mise en culture du premier mélange contenant une culture à une température et pendant une durée suffisantes pour obtenir un premier mélange de culture stable au pH, le pH stable étant de 3,5 à 5,5 ;
(6) la fourniture d'un deuxième mélange d'ingrédients laitiers ayant une deuxième quantité de protéine laitière, des sels et des gommes ;
(7) l'ajout du deuxième mélange au premier mélange de culture stable au pH pour former un troisième mélange ;
(8) le chauffage et l'homogénéisation du troisième mélange à une température et pendant une durée suffisantes pour obtenir un produit laitier de culture contenant des ingrédients laitiers de culture et non de culture, ayant une quantité totale de protéine laitière ; et
(9) l'aération du produit laitier de culture pour obtenir un produit laitier de culture aéré ayant un foisonnement supérieur ou égal à environ 5 pourcent ;
la première quantité de protéine laitière étant de 10 à 40 pourcent et la deuxième quantité de protéine laitière étant de 60 à 90 pourcent, par rapport à la quantité totale de protéine laitière, le produit laitier de culture aéré ayant un rapport entre protéine lactosérique et caséine supérieur à 60:40, et le procédé ne comprenant pas d'étape de séparation du lactosérum.

7. Procédé selon la revendication 6, dans lequel un édulcorant est mélangé avec le produit laitier de culture avant l'aération, le produit laitier de culture aéré contenant moins de 12 pourcent de matière grasse, plus de 5 pourcent de protéine laitière totale, de 40 à 80 pourcent d'humidité, et ayant un rapport entre matière grasse et protéine laitière totale inférieur à 2,5.

8. Procédé selon la revendication 6 ou 7, dans lequel le produit laitier de culture aéré contient de 3 à 9 pourcent de matière grasse, de 6 à 10 pourcent de protéine laitière totale, et de 60 à 75 pourcent d'humidité, le rapport entre matière grasse et protéine laitière totale étant inférieur à 1,4, et le foisonnement étant de 15 à 50 pourcent.
